# EUROPÄISCHE PATENTANMELDUNG

(11) **EP 3 702 183 A1**
(43) Veröffentlichungstag der Anmeldung: **02.09.2020**
(21) Anmeldenummer: 19160267.1
(22) Anmeldetag: 01.03.2019
(51) Int. Cl.: B60H 1/24

(54) **FAHRGASTRAUMENTLÜFTUNG**

(71) Anmelder: MAGNA STEYR Fahrzeugtechnik AG & Co KG, 8041 Graz (AT)
(72) Erfinder: MAURER, Roman, 8141 Premstätten (AT); SCHAUMBERGER, Jörg, 8141 Premstätten (AT)
(74) Vertreter: Zangger, Bernd

(57) **Zusammenfassung**

Eine Fahrgastraumentlüftung zur Entlüftung des Innenraums eines Kraftfahrzeugs, umfassend eine Austrittsöffnung (1) der Fahrgastraumentlüftung und einen Verbindungskanal (2) zum Ausleiten von Luft in einer Luftaustrittsrichtung (A), der den Innenraum mit der Austrittsöffnung (1) verbindet, wobei an der Außenseite der Austrittsöffnung (1) eine Blende (3) angeordnet ist, so dass ein Eintritt von Wasser in den Verbindungskanal (2) durch die Austrittsöffnung (1) aus einem untolerierten Winkelbereich reduziert wird und daher auf einen tolerierten Winkelbereich begrenzt wird, wobei an einer ersten Bewandung (4) des Verbindungskanals, in einem Bereich auf welchen durch die Austrittsöffnung (1) im tolerierten Winkelbereich eintretendes Wasser auftrifft, eine im Querschnitt zumindest annähernd U-förmige Wasserleitschnecke (5) ausgebildet ist.

## Beschreibung

### Gebiet der Erfindung

Die vorliegende Erfindung betrifft eine Fahrgastraumentlüftung zur Entlüftung des Innenraums eines Kraftfahrzeugs.

### Stand der Technik

Es ist bekannt in Kraftfahrzeugen Entlüftungsöffnungen, insbesondere Entlüftungsschlitze, vorzusehen um ein Entweichen von Luft aus dem Innenraum des Kraftfahrzeuges in die Umgebung des Fahrzeugs dauerhaft zu ermöglichen, beispielsweise von durch eine Innenraum-Klimaanlage eingebrachter Luft. Solche Entlüftungsöffnungen können bekannterweise insbesondere im Bereich einer Hecksäule oder im Bereich des Hecks eines Kraftfahrzeugs ausgebildet sein.

Wesentlich für die Funktion solcher Entlüftungen von Kraftfahrzeugen ist, dass gleichzeitig der Eintritt von Wasser in das Fahrzeug über die Entlüftungsöffnungen möglichst weitgehend verhindert wird um Schäden durch unerwünschten Wassereintritt, beispielsweise durch Spritzwasser oder Reinigungswasser in einer Waschstraße, zu vermeiden.

Alternativ oder ergänzend zur Vermeidung des unerwünschten Wassereintritts wird versucht eintretendes Wasser rasch wieder abzuführen.

Eine Entlüftungsvorrichtung für den Innenraum eines Fahrzeuges mit einer Entlüftungsöffnung ist beispielsweise aus der DE 43 22 213 C1 bekannt.

Insbesondere bei Verbauung von Entlüftungsöffnungen in einer weniger geschützten Lage an der Oberfläche des Kraftfahrzeuges ist es wichtig den Eintritt von Wasser, auch beispielsweise von einem Hochdruckstrahl, effizient zu verhindern, wobei jedoch der Querschnitt, welcher zur Entlüftung des Innenraums erforderlich ist, möglichst wenig eingeschränkt werden soll.

### Zusammenfassung der Erfindung

Es ist eine Aufgabe der Erfindung, Fahrgastraumentlüftungen zur Entlüftung des Innenraums eines Kraftfahrzeugs der genannten Art in dieser Hinsicht zu verbessern und insbesondere eine Fahrgastraumentlüftung anzugeben, die einen unerwünschten Wassereintritt weitgehend verhindert und dabei eine effiziente Entlüftung ermöglicht.

Die Lösung der Aufgabe erfolgt durch eine Fahrgastraumentlüftung zur Entlüftung des Innenraums eines Kraftfahrzeugs, umfassend eine Austrittsöffnung der Fahrgastraumentlüftung und einen Verbindungskanal zum Ausleiten von Luft in einer Luftaustrittsrichtung, der den Innenraum mit der Austrittsöffnung verbindet, wobei an der Außenseite der Austrittsöffnung eine Blende angeordnet ist, so dass ein Eintritt von Wasser in den Verbindungskanal durch die Austrittsöffnung aus einem untolerierten Winkelbereich reduziert wird und daher auf einen tolerierten Winkelbereich begrenzt wird, wobei an einer ersten Bewandung des Verbindungskanals, in einem Bereich auf welchen durch die Austrittsöffnung im tolerierten Winkelbereich eintretendes Wasser auftrifft, eine im Querschnitt zumindest annähernd U-förmige Wasserleitschnecke ausgebildet ist.

Erfindungsgemäß ist die Form einer Fahrgastraumentlüftung innerhalb einer Austrittsöffnung zur Entlüftung speziell ausgeformt, also das "Gehäuse" der Fahrgastraumentlüftung. Dabei sorgt zunächst eine Blende, insbesondere eine entsprechend geneigt ausgebildete Blende, dafür, dass nur eine reduzierte Menge Wasser in das Gehäuse der Fahrgastraumentlüftung und somit in den Verbindungskanal eintritt, der die Austrittsöffnung an der Oberfläche des Fahrzeugs mit dem Innenraum des Fahrzeugs verbindet, wobei zusätzlich die Richtung des eintretenden Wasser auf eine gewünschte Wassereintrittsrichtung fokussiert wird, so dass ein dennoch eintretender Strahl von Wasser bzw. Wassertropfen gezielter handhabbar wird. Der "tolerierte Winkelbereich" beschreibt einen Bereich von Winkeln zwischen dem Weg des eintretenden Wassers und der Ebene der Austrittsöffnung. Der Schwerpunkt oder Mittelpunkt des tolerierten Winkelbereichs entspricht daher im Wesentlichen der Wassereintrittsrichtung und auch der Gegenrichtung zur Luftaustrittsrichtung.

Erfindungsgemäß wird das in Wassereintrittsrichtung eintretende Wasser durch eine "Schnecke", die Wasserleitschnecke, in dessen Richtung umgelenkt. Dazu weist die Wasserleitschnecke zumindest eine U Form auf, um das eintretende Wasser umzulenken.

Durch die zumindest U-förmige Wasserleitschnecke kann, je nach Richtung und Impuls des auftreffenden Wassers und konkreter Ausformung der Wasserleitschnecke erreicht werden, dass das in einer Wassereintrittsrichtung eintretende Wasser im Wesentlichen in seine Gegenrichtung, also in die Luftaustrittsrichtung umgelenkt wird und/oder dass das in Wassereintrittsrichtung eintretende Wasser im Bereich einer stärkeren Krümmung der Wasserleitschnecke verwirbelt wird bzw. der eintretende Wasserstrahl im Wesentlichen gebrochen und gefangen wird, sodass das in die Wasserleitschnecke eingetretene Wasser, insbesondere ein Hochdruckwasserstrahl, im Wesentlichen nicht über den Endbereich der Wasserleitschnecke hinaus in den Bereich der austretenden Luft gelangt und sich somit nicht mit dem Luftweg vermischt, sondern über die Wasserleitschnecke abrinnt.

Durch die erfindungsgemäße Ausbildung und Anordnung der Wasserleitschnecke wird auch bei einer exponiert angeordneten Fahrgastraumentlüftung der Wassereintrag bzw. ein Hochdruckwasserstrahl ausreichend gebrochen und der Querschnitt, welcher zur Entlüftung des Innerraums erforderlich ist, wenig eingeschränkt und infolge nur geringer auftretender Verwirbelungen wenig reduziert. Der Druckverlust der entweichenden, in Luftaustrittsrichtung ausströmenden Luft wird minimal gehalten und der Wassereintritt wird durch Entkoppelung des Luft- Wasserweges verhindert.

Die Fahrgastraumentlüftung ist vorzugsweise angebracht im direkten Außenbereich, so dass durch die Austrittsöffnung eine Entlüftung in den Außenbereich des Kraftfahrzeugs erfolgt.

Die Fahrgastraumentlüftung, insbesondere die Austrittsöffnung, ist bevorzugt am Heck des Kraftfahrzeugs, insbesondere an einer Hecksäule des Kraftfahrzeugs, angeordnet.

Vorzugsweise nimmt die Krümmung des Querschnitts der Wasserleitschnecke in Wassereintrittsrichtung zumindest abschnittsweise zu. Die Wasserleitschnecke bildet bevorzugt zumindest abschnittsweise eine Spirale aus. Insbesondere ein Endbereich der Wasserleitschnecke kann dabei wieder eine geringere Krümmung oder gar keine Krümmung aufweisen und insbesondere eine Wasserablaufkante bilden.

Bei stärkerer Krümmung des Endbereiches der Wasserleitschnecke wird das in Wassereintrittsrichtung eintretende Wasser bzw. eintretende Wasserstrahl, insbesondere Hochdruckwasserstrahl, durch die Schnecke nicht bloß umgelenkt, sondern im Endbereich der Wasserleitschnecke gebrochen und derart verwirbelt, dass es im Wesentlichen zu keiner Vermischung der aus dem Innenraum des Kraftfahrzeugs austretenden Luft und dem durch die Wasserleitschnecke gefangenen Wasser mehr kommt. Das im Endbereich der Wasserleitschnecke über die flächige Erstreckung der Wasserleitschnecke so gefangene Wasser kann über eine vorzugsweise senkrecht angeordnete Wasserleitschnecke nach unten abrinnen. Am Boden der Schnecke wird das Wasser bevorzugt gesammelt und vorzugsweise über einen geneigten Boden nach außen abgeleitet.

Die Wasserleitschnecke weist bevorzugt eine gefäßartige Bodenstruktur auf, um das in der Wasserleitschnecke gefangene und abgeronnene Wasser zu sammeln.

Alternativ oder zusätzlich weist die Wasserleitschnecke bevorzugt einen geneigten Boden auf, um das in der Wasserleitschnecke gesammelte Wasser nach außen abzuleiten.

Die Wasserleitschnecke steht bevorzugt von der ersten Bewandung in Richtung zu einer zweiten Bewandung des Verbindungskanals ab, ist also von einer Wand des Verbindungskanals zur gegenüberliegenden Wand des Verbindungskanals hin ausgerichtet und somit im Inneren des Verbindungskanals angeordnet. Zwischen dem Ende der Wasserleitschnecke und der zweiten Bewandung des Verbindungskanals besteht dabei ein ausreichend großer Abstand zum effektiven Austritt von Luft, beispielsweise bleibt etwa der halbe Querschnitt des Verbindungskanals trotz Ausbildung der Wasserleitschnecke frei.

Im Verbindungskanal ist bevorzugt, in Luftaustrittsrichtung vor der Wasserleitschnecke, zumindest eine in Luftaustrittsrichtung öffnende Dichtungsklappe angeordnet. Hierdurch wird ein Austritt von Luft durch den Verbindungskanal ermöglicht, ein Eintritt von Luft, Wassernebel, Emissionen, Staub oder Schall in den Innenraum des Kraftfahrzeugs jedoch verhindert. Besonders bevorzugt können übereinander oder nebeneinander, also parallel, mehrere - zumindest zwei - Dichtungsklappen im Verbindungskanal angeordnet sein.

Vorzugsweise ist die Wasserleitschnecke ein flächiges Bauteil, mit zumindest U-förmiger Stirnseite, so dass im Inneren der Wasserleitschnecke gesammeltes Wasser entlang der flächigen Erstreckung der Wasserleitschnecke, also im Wesentlichen in einer Richtung normal auf die Stirnseite, abrinnen kann. Besonders bevorzugt weist die Stirnseite des flächigen Bauteils eine zumindest abschnittsweise zunehmende Krümmung auf.

Die Blende ist bevorzugt einseitig, im Bereich der ersten Bewandung, befestigt und weist vorzugsweise eine Neigung zur anderen Seite hin, nach außen, auf, so dass die Blende die Form der Wasserleitschnecke ergänzt. Die Ausrichtung der Blende bildet also gewissermaßen bereits einen Teil der Wasserleitschnecke aus. Die Blende kann dabei bereits eine Krümmung auf die selbe Seite wie die Wasserleitschnecke aufweisen oder auch als ebenes Bauteil ausgebildet sein.

Die Wasserleitschnecke kann aus mehreren, also aus mindestens zwei Bauteilen zusammengesetzt sein.

Die Wasserleitschnecke kann, insbesondere abschnittsweise, durch die erste Bewandung ausgebildet sein. Die Wasserleitschnecke kann somit umgekehrt betrachtet einen Abschnitt der Bewandung des Verbindungskanals ausbilden.

Die Heckenlüftung kann insbesondere direkt an der Karosserie, also an der Oberfläche des Kraftfahrzeugs angeordnet sein. Die Austrittsöffnung kann in einem Karosseriebauteil ausgebildet sein. Die Fahrgastraumentlüftung kann insbesondere oberhalb eines hinteren Stoßfängers angeordnet sein. Die Fahrgastraumentlüftung, insbesondere deren Austrittsöffnung, kann vertikal in einer Hecksäule angeordnet sein.

### Kurzbeschreibung der Zeichnungen

Die Erfindung wird im Folgenden beispielhaft unter Bezugnahme auf die Zeichnungen beschrieben.
- Fig. 1a: ist eine Schnittansicht einer erfindungsgemäßen Fahrgastraumentlüftung.
- Fig. 1b: ist eine Schnittansicht einer erfindungsgemäßen Fahrgastraumentlüftung gemäß Fig. 1 mit einem alternativen Wasserweg.
- Fig. 2: ist eine Schnittansicht einer weiteren erfindungsgemäßen Fahrgastraumentlüftung.
- Fig. 3: ist eine Schnittansicht einer weiteren erfindungsgemäßen Fahrgastraumentlüftung.

### Detaillierte Beschreibung der Erfindung

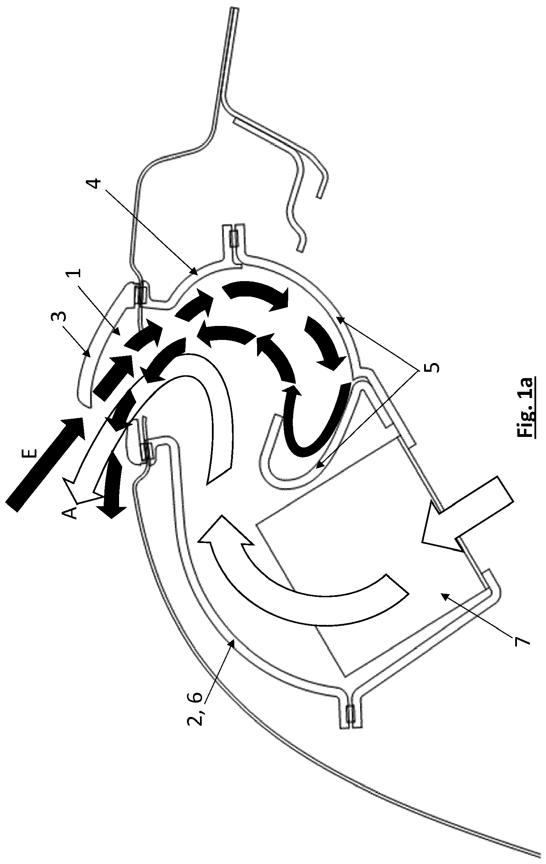

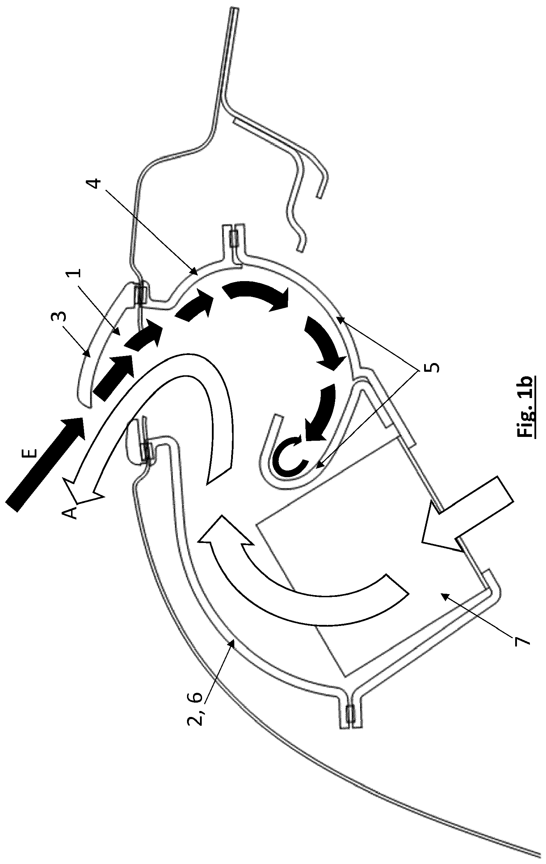

In Fig. 1a und 1b ist eine erfindungsgemäße Fahrgastraumentlüftung dargestellt, wobei die Richtung von aus dem Innenraum eines Kraftfahrzeuges austretender Luft, also die Luftaustrittsrichtung A, mit innen weißen Pfeilen dargestellt ist und die Richtung von in den Verbindungskanal 2 der Fahrgastraumentlüftung eintretendem Wasser, also die Wassereintrittsrichtung E, mit dicken schwarzen Pfeilen eingezeichnet ist.

Die Fahrgastraumentlüftung, zur Entlüftung des Innenraums des Kraftfahrzeugs, vorzugsweise am Heck des Kraftfahrzeugs, umfasst eine Austrittsöffnung 1 der Fahrgastraumentlüftung, die über einen Verbindungskanal 2 mit einem Innenraum des Kraftfahrzeuges verbunden ist. Der Verbindungskanal 2 dient zum Ausleiten von Luft in der Luftaustrittsrichtung A.

Im Verbindungskanal 2 ist, in Luftaustrittsrichtung A vor der Wasserleitschnecke 5, eine in Luftaustrittsrichtung A öffnende Dichtungsklappe 7 angeordnet, die in Fig. 1a und 1b geöffnet dargestellt ist.

An der Außenseite der Austrittsöffnung 1 ist eine geneigte Blende 3 angeordnet, durch welche ein Eintritt von Wasser in den Verbindungskanal 2 durch die Austrittsöffnung 1 aus einem untolerierten Winkelbereich reduziert wird und daher auf einen tolerierten Winkelbereich begrenzt wird, nämlich im Wesentlichen auf die Wassereintrittsrichtung E. Die Blende 3 ist einseitig, im Bereich einer ersten Bewandung 4, befestigt und weist eine Neigung zur anderen Seite hin, nach außen, auf, so dass die Blende 3 die Form der Wasserleitschnecke 5 fortführt bzw. ergänzt.

An der ersten Bewandung 4 des Verbindungskanals, also an einer Begrenzungswand des Verbindungskanals 2, ist in einem Bereich, auf welchen durch die Austrittsöffnung 1 in Wassereintrittsrichtung eintretendes Wasser auftrifft, eine im Querschnitt zumindest annähernd U-förmige Wasserleitschnecke 5 ausgebildet, die so ausgebildet ist, dass das in der Wassereintrittsrichtung E eintretende Wasser im Wesentlichen in seine Gegenrichtung, also in die Luftaustrittsrichtung A, umgelenkt wird.

Die Figuren stellen jeweils einen Schnittansicht durch die flächige Erstreckung der Fahrgastraumentlüftung, insbesondere der Wasserleitschnecke, dar, wobei der Schnitt normal auf die flächige Erstreckung liegt. Somit zeigen die Schnitte jeweils den Querschnitt bzw. die Stirnseite der Fahrgastraumentlüftung bzw. der Wasserleitschnecke, der Austrittsöffnung etc. Der Schnitt entspricht bevorzugt einem horizontalen Schnitt in Einbaulage in einem Fahrzeug. Gefangenes Wasser kann somit in Einbaulage in einem Fahrzeug entlang der flächigen Erstreckung der Wasserleitschnecke nach unten abrinnen.

Die Wasserleitschnecke 5 hat anfangs in etwa eine Kreisbogenform, anschließend nimmt die Krümmung des Querschnitts der Wasserleitschnecke 5 in Wassereintrittsrichtung E zumindest abschnittsweise zu. Am Ende geht die Wasserleitschnecke in einen ebenen Auslauf über. Insgesamt weist der Querschnitt bzw. die Stirnseite der Wasserleitschnecke etwa Schneckenform bzw. Spiralform auf.

Das eintretende Wasser kann, je nach dessen Energie und konkreter Form der Wasserleitschnecke im Wesentlichen einen Weg wie in Fig 1a und/oder wie in Fig 1b dargestellt nehmen.

Wie in Fig. 1a dargestellt, kann die kinetische Energie des eintretenden Wassers durch die Wasserleitschnecke in seine Gegenrichtung, also in etwa um 180 Grad umgelenkt werden, wie die schwarzen Pfeile in Fig. 1 veranschaulichen. Das Wasser kann dann zumindest teilweise durch die Austrittsöffnung wieder aus der Fahrgastraumentlüftung austreten.

Besonders bevorzugt wird die Wasserleitschnecke 5 so ausgebildet, dass zumindest ein Großteil des eintretenden Wassers einen Weg wie in Fig. 1 b dargestellt nimmt. Hierzu weist die Wasserleitschnecke 5 bevorzugt eine entsprechend starke Krümmung und besonders bevorzugt einen weniger stark gekrümmten Auslaufbereich am Ende des Wasserleitschnecke 5 auf.

Die kinetische Energie des eintretenden Wasser wird durch die Wasserleitschnecke abgebaut und fällt auf Grund der Schwerkraft nach unten bzw. rinnt entlang der flächigen Erstreckung der Wasserleitschnecke 5 nach unten, wo es durch eine am Boden der Wasserleitschnecke 5 gefäßartig ausgebildete Struktur gesammelt und kontrolliert abgeleitet werden kann, vorzugsweise durch einen geneigten Boden nach außen abrinnen kann. Hierdurch kommt es im Wesentlichen zu einer Trennung der aus dem Innenraum austretenden Luft und einem durch die Austrittsöffnung 1 eintretendem Wasserstrahl, insbesondere Hochdruckwasserstrahl, sodass kein Wassernebel mehr in den Innenraum des Kraftfahrzeugs gelangt.

Die Wasserleitschnecke 5 steht von der ersten Bewandung 4 in Richtung zur gegenüberliegenden zweiten Bewandung 6 des Verbindungskanals 2 ab, wobei zwischen dem Ende der Wasserleitschnecke 5 und der zweiten Bewandung 6 ein ausreichend großer Abstand zum effektiven Austritt von Luft besteht.

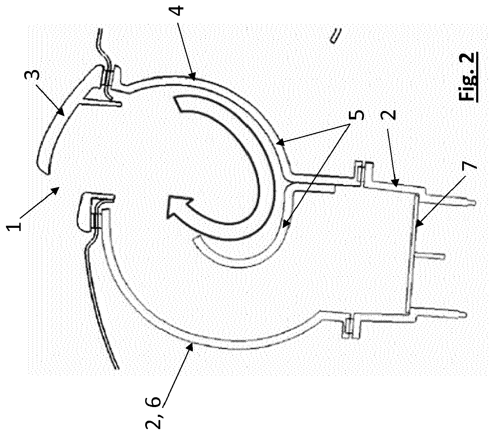

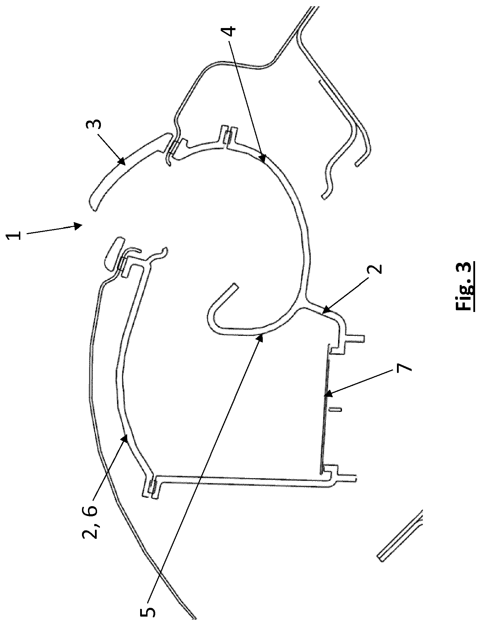

Dargestellt ist in Fig. 1a und 1b, wie auch den Fig. 2 und 3, jeweils ein Schnitt oder auch die Stirnseite einer Fahrgastraumentlüftung. Die Fahrgastraumentlüftung, insbesondere die die Wasserleitschnecke 5, besteht aus flächigen Bauteilen, wobei die Stirnseite der Wasserleitschnecke die beschriebene zumindest U-förmige Form aufweist. Im Inneren der Wasserleitschnecke 5 kann gesammeltes Wasser entlang der flächigen Erstreckung der Wasserleitschnecke 5, insbesondere in einer Richtung normal auf die dargestellte Stirnseite, abrinnen.

Die Wände des Verbindungskanals 2 und insbesondere auch die Wasserleitschnecke 5 selbst, ist aus mehreren gefügten Bauteilen zusammengesetzt.

Die Wasserleitschnecke 5 wird teilweise von Bauteilen gebildet, die gleichzeitig die erste Bewandung 4 des Verbindungskanals 2 abschnittsweise ausbilden.

Die Fig. 2 und 3 zeigen alternative Ausführungen von erfindungsgemäßen Fahrgastraumentlüftungen, wobei die Formen der Wasserleitschnecken sowie die Zusammensetzungen aus Bauteilen unterschiedlich sind, jedoch stets eine Umkehrung von eintretendem Wasser erreicht wird und dieses somit gezielt über die Austrittsöffnung 1 wieder abgegeben und/oder entlang der Wasserleitschnecke 5 abgeleitet werden kann.

In der Ausführung der Wasserleitschnecke 5 gemäß Fig. 2 wird das eintretende Wasser auf Grund der schwächeren Krümmung im Endbereich der Schnecke eher einen Weg nehmen, wie in Fig. 1a dargestellt.

In der Ausführung der Wasserleitschnecke 5 gemäß Fig. 3 wird das eintretende Wasser auf Grund der stärkeren Krümmung im Endbereich der Schnecke eher einen Weg nehmen, wie in Fig. 1b dargestellt, wird also gesammelt um in der Wasserleitschnecke 5 abzurinnen.

### Bezugszeichenliste

- 1: Austrittsöffnung
- 2: Verbindungskanal
- 3: Blende
- 4: erste Bewandung des Verbindungskanals
- 5: Wasserleitschnecke
- 6: zweite Bewandung des Verbindungskanals
- 7: Dichtungsklappe

- A: Luftaustrittsrichtung
- E: Wassereintrittsrichtung

## Patentansprüche

1. Fahrgastraumentlüftung zur Entlüftung des Innenraums eines Kraftfahrzeugs, umfassend eine Austrittsöffnung (1) der Fahrgastraumentlüftung und einen Verbindungskanal (2) zum Ausleiten von Luft in einer Luftaustrittsrichtung (A), der den Innenraum mit der Austrittsöffnung (1) verbindet, wobei an der Außenseite der Austrittsöffnung (1) eine Blende (3) angeordnet ist, so dass ein Eintritt von Wasser in den Verbindungskanal (2) durch die Austrittsöffnung (1) aus einem untolerierten Winkelbereich reduziert wird und daher auf einen tolerierten Winkelbereich begrenzt wird,
**dadurch gekennzeichnet, dass** an einer ersten Bewandung (4) des Verbindungskanals, in einem Bereich auf welchen durch die Austrittsöffnung (1) im tolerierten Winkelbereich eintretendes Wasser auftrifft, eine im Querschnitt zumindest annähernd U-förmige Wasserleitschnecke (5) ausgebildet ist.

2. Fahrgastraumentlüftung nach Anspruch 1,
**dadurch gekennzeichnet, dass** die Krümmung des Querschnitts der Wasserleitschnecke (5) in Wassereintrittsrichtung (E) zumindest abschnittsweise zunimmt.

3. Fahrgastraumentlüftung nach zumindest einem der vorhergehenden Ansprüche,
**dadurch gekennzeichnet, dass** die Wasserleitschnecke (5) von der ersten Bewandung (4) in Richtung zu einer gegenüberliegenden zweiten Bewandung (6) des Verbindungskanals (2) absteht, wobei zwischen dem Ende der Wasserleitschnecke (5) und der zweiten Bewandung (6) ein ausreichend großer Abstand zum effektiven Austritt von Luft besteht.

4. Fahrgastraumentlüftung nach zumindest einem der vorhergehenden Ansprüche,
**dadurch gekennzeichnet, dass** im Verbindungskanal (2), in Luftaustrittsrichtung (A) vor der Wasserleitschnecke (5), zumindest eine, bevorzugt übereinander oder nebeneinander mehrere, in Luftaustrittsrichtung (A) öffnende Dichtungsklappe (7) angeordnet ist.

5. Fahrgastraumentlüftung nach zumindest einem der vorhergehenden Ansprüche,
**dadurch gekennzeichnet, dass** die Wasserleitschnecke (5) ein flächiges Bauteil bildet, mit zumindest U-förmiger, bevorzugt eine zumindest abschnittsweise zunehmende Krümmung aufweisender Form der Stirnseite, so dass im Inneren der Wasserleitschnecke (5) gesammeltes Wasser entlang der flächigen Erstreckung der Wasserleitschnecke (5), vorzugsweise im Wesentlichen Senkrecht nach unten, abrinnen kann.

6. Fahrgastraumentlüftung nach zumindest einem der vorhergehenden Ansprüche,
**dadurch gekennzeichnet, dass** die Wasserleitschnecke (5) eine gefäßartige Bodenstruktur aufweist, um das in der Wasserleitschnecke (5) gefangene und abgeronnene Wasser zu sammeln.

7. Fahrgastraumentlüftung nach zumindest einem der vorhergehenden Ansprüche,
**dadurch gekennzeichnet, dass** die Wasserleitschnecke (5) einen geneigten Boden aufweist, um das in der Wasserleitschnecke (5) gesammelte Wasser nach außen abzuleiten.

8. Fahrgastraumentlüftung nach zumindest einem der vorhergehenden Ansprüche,
**dadurch gekennzeichnet, dass** die Blende (3) einseitig, im Bereich der ersten Bewandung (4), befestigt ist, und eine Neigung zur anderen Seite hin nach außen aufweist, so dass die Blende (3) die Form der Wasserleitschnecke (5) ergänzt.

9. Fahrgastraumentlüftung nach zumindest einem der vorhergehenden Ansprüche,
**dadurch gekennzeichnet, dass** die Wasserleitschnecke (5) aus mindestens zwei Bauteilen zusammengesetzt ist.

10. Fahrgastraumentlüftung nach zumindest einem der vorhergehenden Ansprüche,
**dadurch gekennzeichnet, dass** die erste Bewandung (4) des Verbindungskanals (2) zumindest abschnittsweise die Wasserleitschnecke (5) ausbildet.
